# EUROPEAN PATENT APPLICATION

(11) **EP 4 672 468 A1**
(43) Date of publication of application: **31.12.2025**
(21) Application number: 24895710.2
(22) Date of filing: 01.08.2024
(51) Int. Cl.: H01M 50/35, H01M 50/244

(54) **BATTERY AND ELECTRICAL APPARATUS**

(30) Priority: 28.11.2023 CN 202323248256 U
(71) Applicant: Contemporary Amperex Technology Co., Limited, Ningde, Fujian 352100 (CN)
(72) Inventor: WU, Kai, Ningde, Fujian 352100 (CN); LIU, Sike, Ningde, Fujian 352100 (CN); GU, Mingguang, Ningde, Fujian 352100 (CN); LI, Yao, Ningde, Fujian 352100 (CN); CHEN, Shilong, Ningde, Fujian 352100 (CN)
(74) Representative: Ziebig Hengelhaupt Intellectual Property Attorneys Patentanwaltskanzlei PartGmbB
(86) International application number: PCT/CN2024/109095
(87) International publication number: WO 2025/112607

(57) **Abstract**

A battery (10) and an electrical apparatus are disclosed. Specifically, the battery (10) includes a battery cell (20), a support component (30), a first plate (40), and a protective component (50); the battery cell (20) includes a pressure relief mechanism (213), and the pressure relief mechanism (213) is arranged on a first wall (2001) of the battery cell (20); the support component (30) abuts against the first wall (2001) to support the battery cell (20), and the support component (30) is arranged between the battery cell (20) and the first plate (40). The support component (30) and the first plate (40) are arranged at an interval to form an accommodating space (60), and the accommodating space (60) is used to accommodate an emission from the battery cell (20) when the pressure relief mechanism (213) is actuated; and the protective component (50) is arranged between the support component (30) and the first plate (40) and arranged opposite to the pressure relief mechanism (213), and is used to withstand an impact force of the emission. By arranging the protective component (50), the probability of the emission puncturing the first plate (40) can be reduced, thereby reducing the probability of thermal runaway propagation.

## Description

### CROSS-REFERENCE TO RELATED APPLICATIONS

The present application claims priority to Chinese Patent Application No. 202323248256.8, entitled "BATTERY AND ELECTRICAL APPARATUS" and filed on November 28, 2023, which is incorporated herein by reference in its entirety.

### TECHNICAL FIELD

The present application relates to the field of battery technologies, and in particular, to a battery and an electrical apparatus.

### BACKGROUND

Energy conservation and emission reduction are the key to the sustainable development of the automobile industry. In this case, due to the advantages of energy conservation and environment protection, electric vehicles have become an important part of the sustainable development of the automobile industry. The battery technologies are an important factor related to the development of electric vehicles.

In the development of the battery technologies, thermal runaway of batteries is an issue that cannot be ignored. If a battery is susceptible to thermal runaway, the battery is unusable. Therefore, how to reduce the probability of thermal runaway of batteries is an urgent problem to be solved in the battery technologies.

### SUMMARY OF THE INVENTION

Embodiments of the present application provide a battery and an electrical apparatus, which is capable of reducing the probability of an emission inside a battery puncturing the battery, thereby reducing the probability of thermal runaway propagation.

In a first aspect, a battery is provided, where the battery includes a battery cell, a support component, a first plate, and a protective component; the battery cell includes a pressure relief mechanism, and the pressure relief mechanism is arranged on a first wall of the battery cell; the support component abuts against the first wall to support the battery cell, the support component is arranged between the battery cell and the first plate, the support component and the first plate are arranged at an interval to form an accommodating space, and the accommodating space is used to accommodate an emission from the battery cell when the pressure relief mechanism is actuated; and the protective component is arranged between the support component and the first plate and arranged opposite to the pressure relief mechanism, and is used to withstand an impact force of the emission.

In the embodiment of the present application, the protective component opposite to the pressure relief mechanism is arranged between the support component and the first plate inside the battery to withstand the impact of the emission discharged from the interior of the battery cell in the case of thermal runaway, thereby being capable of reducing the probability of the emission puncturing the first plate, and further reducing the probability of thermal runaway propagation.

In some embodiments, the protective component is arranged on a surface of the first plate close to the support component and is connected to the first plate.

In the embodiments of the present application, the protective component is arranged on the surface of the first plate and is connected to the first plate, so that a certain space is provided between the protective component and the pressure relief mechanism, thereby providing a flow space for the emission when the emission is ejected, and reducing the probability of the battery being punctured or the like.

In some embodiments, the protective component is adhered to the first plate.

In the embodiment of the present application, the protective component is adhesively connected to the first plate, and there is no need to provide an additional component for connection. The connection method is simple, and a connection strength between the protective component and the first plate is capable of being improved, thereby reducing the probability of movement of the protective component, and further being capable of reducing the probability of the emission inside the battery puncturing the battery.

In some embodiments, the battery includes a plurality of pressure relief mechanisms and a plurality of protective components, and the plurality of pressure relief mechanisms correspond one-to-one with the plurality of protective components.

In the embodiments of the present application, by arranging the plurality of protective components in a one-to-one correspondence with the plurality of pressure relief mechanisms, the protective components can be flexibly arranged for different pressure relief mechanisms, which is beneficial to reduce the probability of the emission puncturing the first plate, thereby reducing the probability of thermal runaway propagation.

In some embodiments, the battery includes a plurality of pressure relief mechanisms and at least one protective component, and at least two pressure relief mechanisms correspond to one protective component.

In the embodiments of the present application, by arranging one protective component to correspond to at least two pressure relief mechanisms, the protective components with different layouts can be arranged for different batteries, which is beneficial to reduce the probability of the emission puncturing the first plate, thereby reducing the probability of thermal runaway propagation.

In some embodiments, a distance between the support component and the first plate is H, a thickness of the protective component is h, a volumetric energy density of the battery cell is E, and H, h, and E meet a condition: 0.002≤(H*h)/E≤0.6, where h<H, both in a unit of mm, and E is in a unit of Wh/L.

In the embodiments of the present application, by limiting a value range of (H*h)/E to between 0.002 and 0.6, while obtaining a high battery grouping efficiency, the probability of the battery being punctured is capable of being reduced, and the probability of thermal runaway propagation is also capable of being reduced.

In some embodiments, H, h, and E meet a condition: 0.004≤(H*h)/E≤0.3.

In the embodiments of the present application, by further limiting the value range of (H*h)/E to between 0.004 and 0.3, while obtaining a high battery grouping efficiency, the probability of the battery being punctured is reduced, and the probability of thermal runaway propagation is also capable of being reduced.

In some embodiments, a value range of H is: 2 mm≤H≤20 mm, and a value range of h is: 0.2 mm≤h≤5 mm.

In the embodiments of the present application, by setting the values of H and h within a certain range, while obtaining a high battery grouping efficiency, the probability of the battery being punctured is reduced.

In some embodiments, on a plane perpendicular to a thickness direction of the protective component, an overlapping area S1 of a projection of the pressure relief mechanism and a projection of the protective component and a projection area S2 of the pressure relief mechanism meet a condition: 50%≤S1/S2≤100%.

In the embodiments of the present application, when S1/S2 meets the above condition, the protective component is capable of at least covering half of the projection area of the pressure relief mechanism to withstand an impact force of the emission ejected from the pressure relief mechanism, thereby being capable of reducing the probability of the first plate being punctured, and further being capable of reducing the probability of heat propagation in the battery.

In some embodiments, a material of the protective component includes at least one of mica, ceramic, carbon fiber, and aerogel.

In the embodiments of the present application, by setting the material of the protective component, the protective component is capable of playing a better protective role, which is capable of reducing the probability of the battery being punctured, and further reducing the probability of thermal runaway propagation.

In a second aspect, an electrical apparatus is provided, including the battery according to the first aspect or any one of the embodiments in the first aspect. The battery is configured to provide electric energy for the electrical apparatus.

### BRIEF DESCRIPTION OF DRAWINGS

FIG. 1 is a schematic structural diagram of a vehicle according to an embodiment of the present application.
FIG. 2 is a schematic structural diagram of a battery according to an embodiment of the present application.
FIG. 3 is a schematic structural diagram of a battery cell according to an embodiment of the present application.
FIG. 4 is a schematic structural diagram of a battery according to an embodiment of the present application.
FIG. 5 is a schematic structural diagram of another battery according to an embodiment of the present application.
FIG. 6 is a schematic structural diagram of another battery according to an embodiment of the present application.
FIG. 7 is a schematic structural diagram of another battery according to an embodiment of the present application.

### DETAILED DESCRIPTION

Technical solutions in the embodiments of the present application are described below with reference to the drawings. The implementations of the present application are further described in detail below with reference to the drawings and embodiments. The following detailed description of the embodiments and the drawings are configured to illustrate the principles of the present application by way of example, but should not be configured to limit the scope of the present application, that is, the present application is not limited to the described embodiments.

In the description of the present application, it should be noted that, unless otherwise stated, "a plurality of" means two or more. The orientation or positional relationships indicated by the terms "upper", "lower", "left", "right", "inner" and "outer" are only for facilitating the description of the present application and simplifying the description, rather than indicating or implying that the apparatus or element referred to must have a particular orientation or be constructed and operated in a particular orientation, and therefore will not be interpreted as limiting the present application. In addition, the terms "first", "second" and "third" are used for descriptive purposes only, and cannot be construed as indicating or implying relative importance. "Perpendicular" is not strictly perpendicular, but within the allowable range of errors. "Parallel" is not strictly parallel, but within the allowable range of errors.

Orientation words appearing in the following description are all directions shown in the drawings, and do not limit the specific structure of the present application. In the description of the present application, it should also be noted that, unless otherwise expressly specified and limited, the terms "mount," "connected," and "connecting" should be broadly understood, for example, they may be a fixed connection or a detachable connection or be an integrated connection; or may be a direct connection or an indirect connection through an intermediate medium. For those of ordinary skill in the art, the specific meanings of the above terms in the present application may be understood according to specific circumstances.

In the present application, the term "and/or" is only an association relationship for describing associated objects, indicating that there may be three relationships, for example, A and/or B may represent three situations: A exists alone, both A and B exist, and B exists alone. In addition, the character "/" in the present application generally means that the associated objects before and after it are in an "or" relationship.

Unless otherwise defined, all technical and scientific terms used in the present application have the same meaning as commonly understood by those skilled in the art to which the present application belongs. The terms used in the applied specification of present application are for the purpose of describing specific embodiments only, and are not intended to limit the present application. The terms "include/comprise" and "have" and any variations thereof in the specification and claims of the present application as well as in the above description of drawings are intended to cover a non-exclusive inclusion. The terms "first," "second," and the like in the specification and the claims of the present application as well as the above drawings are used to distinguish different objects, rather than to describe a specific order or primary-secondary relationship.

Reference in the present application to an "embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is understood explicitly and implicitly by those skilled in the art that the embodiments described in the present application can be combined with other embodiments.

In the present application, the battery refers to a physical module that includes one or more battery cells to supply electric energy. For example, the battery mentioned in the present application may include a battery module, a battery pack, or the like. The battery generally includes a box body for packaging one or a plurality of battery cells. The box body may reduce the probability of liquid or other foreign matters from affecting charging or discharging of the battery cell.

Optionally, the battery cell may include a lithium-ion secondary battery, a lithium-ion primary battery, a lithium-sulfur battery, a sodium-lithium-ion battery, a sodium-ion battery, a magnesium-ion battery, or the like, which is not limited in embodiments of the present application. The battery cell may be in a cylindrical shape, a flat shape, a cuboid shape or another shape, which is also not limited in the embodiments of the present application. The battery cells are generally classified into three types according to encapsulating manners: cylindrical battery cells, prismatic battery cells and pouch cells, which will also not be limited in the embodiments of the present application.

The battery cell includes an electrode assembly and an electrolytic solution, the electrode assembly being composed of a positive electrode plate, a negative electrode plate and a separator. The operation of the battery cell mainly relies on the movement of metal ions between the positive electrode plate and the negative electrode plate. The positive electrode plate includes a positive electrode current collector and a positive electrode active material layer. The positive electrode active material layer is coated on a surface of the positive electrode current collector, and the current collector not coated with the positive electrode active material layer protrudes from the current collector coated with the positive electrode active material layer and is used as a positive tab. Taking a lithium-ion battery as an example, the positive electrode current collector may be of a material of aluminum, and the positive electrode active material may be lithium cobalt oxide, lithium iron phosphate, ternary lithium or lithium manganate, etc. The negative electrode plate includes a negative electrode current collector and a negative electrode active material layer. The negative electrode active material layer is coated on a surface of the negative electrode current collector, and the current collector not coated with the negative electrode active material layer protrudes from the current collector coated with the negative electrode active material layer and is used as a negative tab. The material of the negative electrode current collector may be copper, and the negative electrode active material may be carbon, silicon, or the like. In order to ensure that no fusing occurs when a large current passes, there are a plurality of positive tabs which are stacked together, and there are a plurality of negative tabs which are stacked together. The separator may be made of a material such as polypropylene (PP) or polyethylene (PE). In addition, the electrode assembly may have a wound structure or a stacked structure, which is not limited in the embodiments of the present application.

In the development of battery technologies, it is needed to consider many design factors at the same time, for example, performance parameters such as energy density, cycle life, discharge capacity, and charge-discharge rate. In addition, it is also necessary to consider the safety of batteries.

For the battery cell, main safety hazards come from charging and discharging processes, and an appropriate ambient temperature design is also required. In order to effectively avoid unnecessary losses, the battery cell generally has at least three protective measures. Specifically, the protective measures include at least a switching element, selection of an appropriate separator material, and a pressure relief mechanism. A switching element refers to an element that is capable of stopping charging or discharging the battery when the temperature or resistance within the battery cell reaches a certain threshold. The separator is used for separating the positive electrode plate and the negative electrode plate, and can automatically dissolve micron-scale (or even nano-scale) micropores attached thereto when the temperature rises to a certain value, so that metal ions cannot pass through the separator, thereby terminating internal reactions of the battery cell.

The pressure relief mechanism refers to an element or a component that is actuated to relieve an internal pressure or heat when the internal pressure or temperature of the battery cell reaches a predetermined threshold. The threshold design varies according to different design requirements. The threshold may depend on the material of one or a plurality of the positive electrode plate, the negative electrode plate, the electrolyte solution, and the separator in the battery cell. The pressure relief mechanism may take the form of an explosion-proof valve, a gas valve, a pressure relief valve, a safety valve, or the like, and may specifically adopt a pressure-sensitive or temperature-sensitive element or structure. That is, when the internal pressure or temperature of the battery cell reaches a predetermined threshold, the pressure relief mechanism performs an action or a weak structure arranged in the pressure relief mechanism is damaged, so as to form an opening or channel for releasing the internal pressure or temperature.

The "actuate" mentioned in the present application means that the pressure relief mechanism performs an action or is activated to a certain state, so that the internal pressure and temperature of the battery cell can be relieved. The action performed by the pressure relief mechanism may include, but is not limited to: at least part of the pressure relief mechanism being broken, crushed, torn, opened, or the like. When the pressure relief mechanism is actuated, high-temperature and high-pressure substances inside the battery cell are discharged as emissions outwards from the actuated part. In this way, the battery cell can achieve pressure relief under controllable pressure or temperature, thereby avoiding potential more serious accidents.

The emissions from the battery cell mentioned in the present application include, but are not limited to: an electrolytic solution, dissolved or split positive and negative electrode plates, fragments of a separator, high-temperature and high-pressure gas generated by reaction, flames, etc.

The pressure relief mechanism on the battery cell has an important impact on the safety performance of the battery. For example, when short circuit, overcharge, and the like occur, thermal runaway may occur inside the battery cell and the pressure may rise suddenly. In this case, the internal pressure and temperature can be released outward through the actuation of the pressure relief mechanism, so as to prevent explosion and fire of the battery cell.

However, when thermal runaway occurs inside a battery cell, a high-temperature and high-pressure fluid ejected from the pressure relief mechanism may damage a shell of the battery, such as puncturing a bottom plate of a box of the battery, thereby affecting the overall performance of the battery.

In view of this, a battery is provided in an embodiment of the present application. The battery includes a battery cell, a support component, a first plate, and a protective component; the battery cell includes a pressure relief mechanism, and the pressure relief mechanism is arranged on a first wall of the battery cell; the support component abuts against the first wall to support the battery cell, and is arranged between the battery cell and the first plate. The support component is arranged at an interval from the first plate to form an accommodating space, and the accommodating space is used to accommodate an emission from the battery cell when the pressure relief mechanism is actuated; and the protective component is arranged between the support component and the first plate and arranged opposite to the pressure relief mechanism, and is used to withstand an impact force of the emission. The protective component opposite to the pressure relief mechanism is arranged between the support component and the first plate inside the battery to withstand the impact of the emission discharged from the interior of the battery cell in the case of thermal runaway, thereby being capable of reducing the probability of the emission puncturing the first plate, thereby reducing the probability of thermal runaway propagation.

The technical solutions described in the embodiments of the present application are all applicable to various apparatuses using batteries, such as mobile phones, portable devices, laptops, battery vehicles, electric toys, electric tools, electric vehicles, ships, spacecrafts, and the like. For example, the spacecrafts include airplanes, rockets, space shuttles, spaceships, and the like.

It should be understood that the technical solutions described in the embodiments of the present application are not only applicable to the foregoing apparatuses, but also applicable to all apparatuses using batteries. However, for the sake of brevity, the following embodiments take electric vehicles as an example for description.

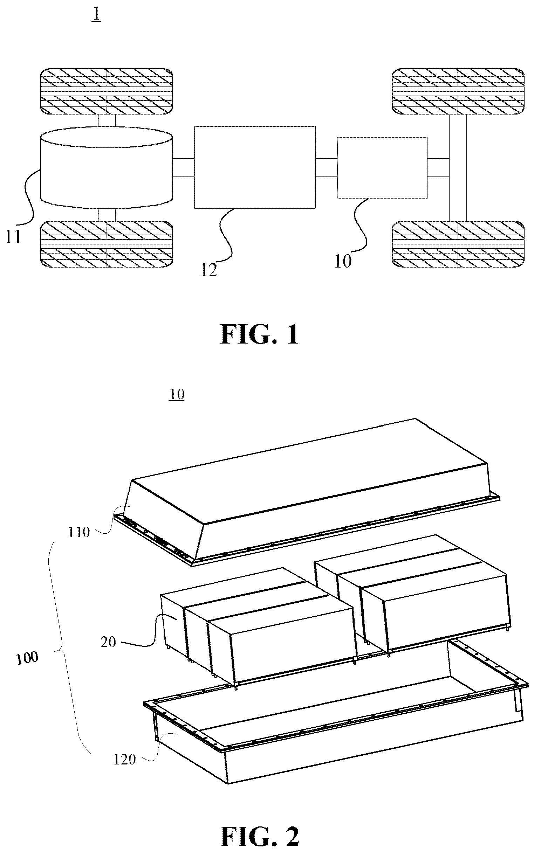

For example, FIG. 1 is a schematic structural diagram of a vehicle 1 according to an embodiment of the present application. The vehicle 1 may be a fuel vehicle, a gas vehicle or a new energy vehicle. The new energy vehicle may be an all-electric vehicle, a hybrid vehicle or an extended-range electric vehicle, or the like. A motor 11, a controller 12 and a battery 10 may be provided inside the vehicle 1, and the controller 12 is configured to control the battery 10 to supply power to the motor 11. For example, the battery 10 may be arranged at the bottom or the head or the tail of the vehicle 1. The battery 10 may be configured to supply power to the vehicle 1, for example, the battery 10 may be used as an operating power source of the vehicle 1, which is used for a circuit system of the vehicle 1, for example, for operation power requirements of the vehicle 1 during starting, navigation and running. In another embodiment of the present application, the battery 10 can be used not only as an operation power supply of the vehicle 1, but also as a driving power supply of the vehicle 1, replacing or partially replacing fuel or natural gas to provide driving power for the vehicle 1.

In order to meet different power requirements, the battery may include a plurality of battery cells, where the plurality of battery cells may be in series connection, parallel connection or series-parallel connection. The series-parallel connection refers to a combination of series connection and parallel connection. The battery may also be referred to as a battery pack. Optionally, first, a plurality of battery cells may be in series connection, parallel connection or series-parallel connection to form a battery module, and then, a plurality of battery modules may be in series connection, parallel connection or series-parallel connection to form a battery. In other words, a plurality of battery cells may directly form a battery, or may first form a battery module, and then, the battery modules form a battery.

For example, as shown in FIG. 2, which is a schematic structural diagram of a battery 10 according to an embodiment of the present application, and the battery 10 may include a plurality of battery cells 20. The battery 10 may further include a box (or a hood), the interior of the box is a hollow structure, and the plurality of battery cells 20 are accommodated in the box. As shown in FIG. 2, the box may include two parts, which are referred to as a first part box body 110 and a second part box body 120, respectively. The first part box body 110 and the second part box body 120 are snap-fitted together. The shapes of the first part box body 110 and the second part box body 120 may be determined according to a shape of a combination of the plurality of battery cells 20, and the first part box body 110 and the second part box body 120 may each have one opening. For example, both the first part box body 110 and the second part box body 120 may be hollow cuboids and each has only one surface being an opening surface, the opening of the first part box body 110 and the opening of the second part box body 120 are arranged opposite to each other, and the first part box body 110 and the second part box body 120 are snap-fitted together to form the box having a closed cavity. After the plurality of battery cells 20 are connected in a parallel, series, or parallel-series connection, they are placed in the box formed after the first part box body 110 and the second part box body 120 are snap-fitted together.

Optionally, the battery 10 can also include other structures, which is not repeated one by one here. For example, the battery 10 may further include a bus component, and the bus component is configured to achieve electrical connection between the plurality of battery cells 20, such as parallel connection, series connection or series-parallel connection. Specifically, the bus component may achieve electrical connection between the battery cells 20 by connecting electrode terminals of the battery cells 20. Further, the bus component may be fixed to the electrode terminals of the battery cells 20 by welding. Electric energy of the plurality of battery cells 20 may be further led out through an electrically conductive mechanism penetrating the box. Optionally, the electrically conductive mechanism may also belong to the bus component.

Depending on different power requirements, the number of battery cells 20 may be set to any value. The plurality of battery cells 20 can be connected in series, in parallel or in parallel-series connection to implement larger capacity or power. The quantity of battery cells 20 included in each battery 10 may be large, and therefore, in order to facilitate mounting, the battery cells 20 may be arranged in groups, with each group of battery cells 20 from a battery module. The quantity of battery cells 20 included in each group of battery cells 20 is not limited and can be set according to demand.

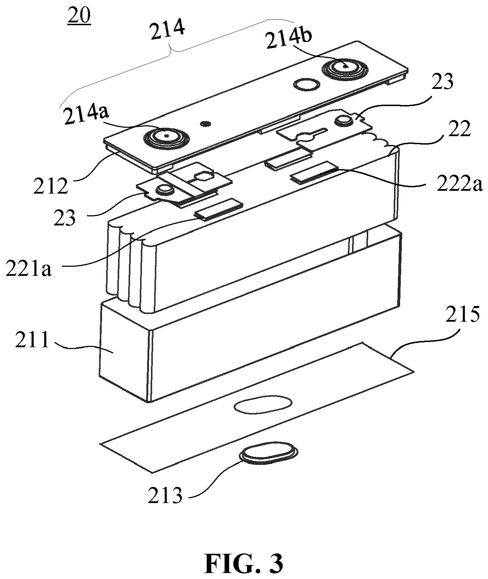

FIG. 3 is a schematic structural diagram of a battery cell 20 according to an embodiment of the present application.

As shown in FIG. 3, the battery cell 20 includes one or a plurality of electrode assemblies 22, a case 211, and a cover plate 212. A wall of the case 211 and the cover plate 212 are each referred to as a wall of the battery cell 20. The case 211 is shaped according to the shape of one or more electrode assemblies 22 after combination. For example, the case 211 may be a hollow cuboid or cube or cylinder, and one surface of the case 211 has an opening such that one or more electrode assemblies 22 can be placed in the case 211. For example, when the case 211 is a hollow rectangular prism or cube, one of the flat planes of the case 211 serves as the open face, meaning that this plane does not have a wall body, allowing the interior and exterior of the case 211 to communicate with each other. When the case 211 may be a hollow cylinder, the end surface of the case 211 is the open face, meaning that this end surface does not have a wall body, allowing the interior and exterior of the case 211 to communicate with each other. The cover plate 212 covers the opening and is connected to the case 211 to form a closed cavity in which the electrode assembly 22 is placed. The case 211 is filled with an electrolyte, such as an electrolytic solution.

The battery cell 20 may further comprise two electrode terminals 214, and the two electrode terminals 214 may be provided on the cover plate 212. The cover plate 212 is generally in the shape of a flat plate, and the two electrode terminals 214 are fixed on a flat plate surface of the cover plate 212. The two electrode terminals 214 are a positive electrode terminal 214a and a negative electrode terminal 214b, respectively. Each electrode terminal 214 is correspondingly provided with a connecting member 23 also called a current collecting member 23, which is located between the cover plate 212 and the electrode assembly 22 and configured to electrically connect the electrode assembly 22 to the electrode terminal 214.

As shown in Fig. 3, each electrode assembly 22 has a first tab 221a and a second tab 222a. The first tab 221a and the second tab 222a have opposite polarities. For example, when the first tab 221a is a positive tab, the second tab 222a is a negative tab. The first tab 221a of one or a plurality of electrode assemblies 22 is connected to one electrode terminal via one connecting member 23, and the second tab 222a of the one or a plurality of electrode assemblies 22 is connected to the other electrode terminal via the other connecting member 23. For example, the positive electrode terminal 214a is connected to the positive tab via one connecting member 23, and the negative electrode terminal 214b is connected to the negative tab via the other connecting member 23.

In the battery cell 20, according to actual use requirements, there may be one or a plurality of electrode assemblies 22 arranged. As shown in FIG. 3, there are 4 independent electrode assemblies 22 arranged in the battery cell 20.

As an example, a pressure relief mechanism 213 may also be provided on one wall of the battery cell 20. When the internal pressure or temperature of the battery cell 20 reaches a threshold, the pressure relief mechanism 213 is configured to be actuated to relieve the internal pressure or temperature.

Optionally, in one embodiment of the present application, the pressure relief mechanism 213 and the electrode terminals 214 are arranged on different walls of the battery cell 20. For example, as shown in FIG. 3, the electrode terminals 214 of the battery cell 20 may be arranged on a top wall of the battery cell 20, that is, the cover plate 212. The pressure relief mechanism 213 is arranged on another wall of the battery cell 20 that is different from the top wall. For example, the first pressure relief mechanism 213 is arranged on a bottom wall 215 opposite to the top wall. For ease of illustration, the bottom wall 215 is separated from the case 211 in FIG. 3, but this does not limit the bottom side of the case 211 to have an opening.

Optionally, in another embodiment of the present application, the pressure relief mechanism 213 and the electrode terminals 214 are arranged on the same wall of the battery cell 20. For example, the electrode terminals 214 and the pressure relief mechanism 213 both may be arranged on the top wall of the battery cell 20, that is, the cover plate 212.

The pressure relief mechanism 213 mentioned above may be a part of the wall on which it is located, or may be a separate structure from the wall on which it is located, and fixed on the wall by welding, for example. For example, in the embodiment shown in FIG. 3, when the pressure relief mechanism 213 is a part of the bottom wall 215, the pressure relief mechanism 213 may be formed by providing a notch in the bottom wall 215, with the thickness of the bottom wall 215 corresponding to the notch being less than the thickness of other regions of the pressure relief mechanism 213 except the notch. The notch position is the weakest position of the pressure relief mechanism 213. When excessive gas generated by the battery cell 20 causes the internal pressure in the case 211 to rise and reach a threshold, or the internal temperature of the battery cell 20 rises and reaches a threshold due to the heat generated by the internal reaction of the battery cell 20, the pressure relief mechanism 213 can crack at the notch position, resulting in the communication between the interior and exterior of the case 211. The gas pressure and the temperature are released outward through the crack of the pressure relief mechanism 213, thereby reducing the probability of explosion of the battery cell 20.

Moreover, the pressure relief mechanism 213 may have various possible pressure relief mechanisms, which is not limited in the embodiments of the present application. For example, the pressure relief mechanism 213 may be a temperature-sensitive pressure relief mechanism, and the temperature-sensitive pressure relief mechanism is configured to be capable of being melt when the internal temperature of the battery cell 20 provided with the pressure relief mechanism 213 reaches a threshold; and/or the pressure relief mechanism 213 may be a pressure-sensitive pressure relief mechanism, and the pressure-sensitive pressure relief mechanism is configured to be capable of being ruptured when the internal air pressure of the battery cell 20 provided with the pressure relief mechanism 213 reaches a threshold.

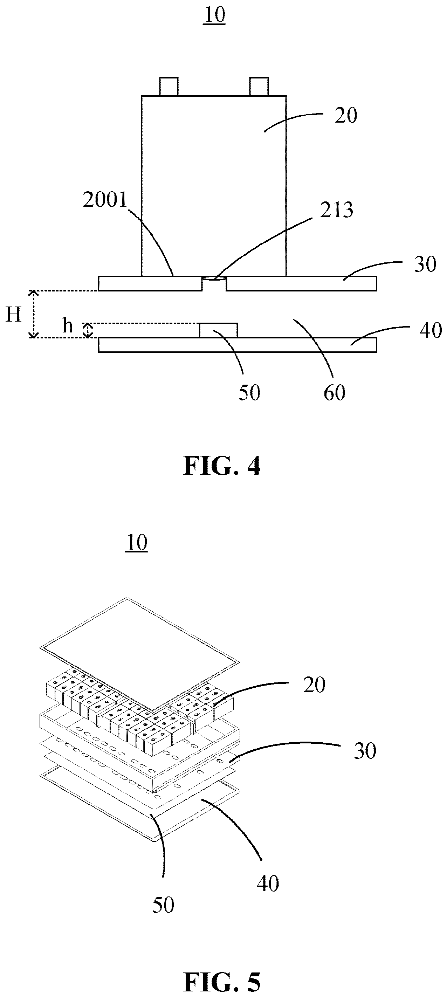

The schematic structural diagram of a battery cell 20 according to an embodiment of the present application is illustrated above with reference to FIG. 3. A structure of a battery provided in an embodiment of the present application is illustrated below with reference to FIG. 4 to FIG. 7.

As shown in FIG. 4, a battery 10 provided in the embodiment of the present application includes a battery cell 20, a support component 30, a first plate 40, and a protective component 50. The battery cell 20 includes a pressure relief mechanism 213, and the pressure relief mechanism 213 is arranged on a first wall 2001 of the battery cell 20. The support component 30 abuts against the first wall 2001 to support the battery cell 20, and is arranged between the battery cell 20 and the first plate 40. The support component 30 is arranged at an interval from the first plate 40 to form an accommodating space 60, and the accommodating space 60 is used to accommodate an emission from the battery cell 20 when the pressure relief mechanism 213 is actuated; and the protective component 50 is arranged between the support component 30 and the first plate 40 and arranged opposite to the pressure relief mechanism 213, and is used to withstand an impact force of the emission.

The basic structure of the battery cell 20 may be obtained with reference to the battery cell 20 in FIG. 2 and FIG. 3, and the specific description of the pressure relief mechanism 213 may also be obtained with reference to the description of the pressure relief mechanism 213, which will not be repeated here.

There may be one or a plurality of battery cells 20 included in the battery 10, which is not limited in the preset application.

The first plate 40 may be a part of the box of the battery 10, that is, used to constitute the box of the battery 10, such as a partial structure of the box in FIG. 2. Alternatively, the first plate 40 may also be an internal structure of the battery 10, instead of being used to constitute the box of the battery 10. Optionally, the first plate 40 may be referred to as a bottom plate 40. The bottom plate 40 may be understood as the bottom of the battery 10 in the direction of gravity.

When the internal pressure or temperature of the battery cell 20 reaches a threshold value, after the pressure relief mechanism 213 is actuated, the emission may sequentially pass through the pressure relief mechanism 213 and the support component 30 and reach a position between the support component 30 and the first plate 40.

The support component 30 may provide a supporting force for the battery cell 20, the accommodating space 60 may be formed between the support component 30 and the first plate 40, and the accommodating space 60 is used to accommodate the emission from the battery cell 20. It should be understood that when the internal pressure or temperature of the battery cell 20 reaches the threshold, the pressure relief mechanism 213 is actuated to discharge the emission.

Optionally, the support component 30 may also isolate an electrical chamber and a discharge chamber of the battery 10. The electric chamber may be understood as a space for accommodating the battery cell 20, and the discharge chamber may be understood as a space for accommodating the emission, that is, the accommodating space 60 between the support component 30 and the first plate 40. In addition, the support component 30 may be a temperature control apparatus of the battery 10, such as a cold plate, or may be an apparatus having other functions, which is not limited in the present application.

The protective component 50 is arranged between the support component 30 and the first plate 40. After being arranged opposite to the pressure relief mechanism 213, the protective component can withstand the impact force of the emission, thereby reducing the probability of the emission damaging the battery 10. It is understandable that the protective component 50 has characteristics such as a certain strength, high temperature resistance, and corrosion resistance.

The protective component 50 opposite to the pressure relief mechanism 213 is arranged between the support component 30 and the first plate 40 inside the battery 10 to withstand the impact of the emission discharged from the interior of the battery cell 20 in the case of thermal runaway, thereby being capable of reducing the probability of the emission puncturing the first plate 40, and further reducing the probability of thermal runaway propagation.

In the embodiment of the present application, the protective component 50 may be arranged on a surface of the first plate 40 close to the support component 30 and connected to the first plate 40.

For example, the connection method between the protective component 50 and the first plate 40 may include adhering, clamping, welding, mortise and tenon connection, bolt connection, and the like, which is not limited in the present application.

The protective component 50 is arranged on the surface of the first plate 40 and is connected to the first plate 40, so that a certain space is provided between the protective component 50 and the pressure relief mechanism 213, thereby providing a flow space for the emission when the emission is ejected, thereby reducing the probability of the battery 10 being punctured or the like.

In the embodiment of the present application, the protective component 50 is adhered to the first plate 40.

The protective component 50 is adhesively connected to the first plate 40, and there is no need to provide an additional component for connection. The connection method is simple, and a connection strength between the protective component 50 and the first plate 40 is capable of being improved, thereby reducing the probability of movement of the protective component 50, and further being capable of reducing the probability of the emission inside the battery puncturing the battery.

Optionally, the protective component 50 may also have a gap with each of the first plate 40 and the support component 30, that is, the protective component 50 may not be arranged on the surface of the first plate 40. For example, an apparatus such as a bracket may be arranged between the first plate 40 and the supporting component 30.

In the embodiment of the present application, the battery 10 includes a plurality of pressure relief mechanisms 213 and a plurality of protective components 50, and the plurality of pressure relief mechanisms 213 correspond one-to-one with the plurality of protective components 50.

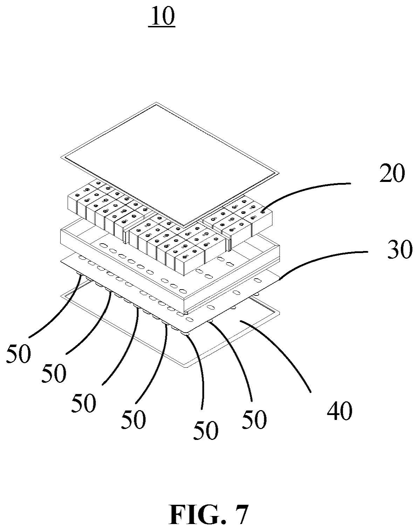

Specifically, the plurality of pressure relief mechanisms 213 correspond one-to-one with the plurality of protective components 50 one by one, for example, as shown in FIG. 7, the plurality of protective components 50 are dispersedly arranged at this point.

By arranging the plurality of protective components 50 to correspond one-to-one with the plurality of pressure relief mechanisms 213, the protective components 50 can be flexibly arranged for different pressure relief mechanisms 213, which is beneficial to reduce the probability of the emission puncturing the first plate 40, thereby reducing the probability of thermal runaway propagation.

In the embodiment of the present application, the battery 10 includes a plurality of pressure relief mechanisms 213 and at least one protective component 50, and at least two pressure relief mechanisms 213 correspond to one protective component 50.

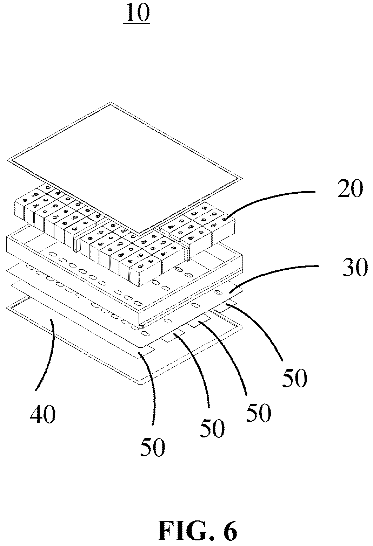

Specifically, when at least two pressure relief mechanisms 213 are arranged opposite to a protective component 50, it is understandable that the protective component 50 is a plate-like structure, such as a single-piece structure, and the single-piece structure corresponds to a plurality of pressure relief mechanisms, such as shown in FIG. 5. Alternatively, it is understandable that the plurality of pressure relief mechanisms 213 and the plurality of protective components 50 are not in one-to-one correspondence. For example, as shown in FIG. 6, a row of pressure relief mechanisms 213 corresponds to a long strip-shaped protective component 50. Alternatively, the plurality of pressure relief mechanisms 213 may be divided into a plurality of groups, each group corresponding to a protective component 50, and the quantities of pressure relief mechanisms 213 in the plurality of groups may be the same or different, which is not limited in the present application.

By arranging one protective component 50 to correspond to at least two pressure relief mechanisms 213, the protective components 50 with different layouts can be arranged for different batteries, which is beneficial to reduce the probability of the emission puncturing the first plate 40, thereby reducing the probability of thermal runaway propagation.

In the embodiment of the present application, as shown in FIG. 4, a distance between the support component 30 and the first plate 40 is H, a thickness of the protective component 50 is h, a volumetric energy density of the battery cell 20 is E, and H, h, and E meet a condition: 0.002≤(H*h)/E≤0.6, where h<H, both in a unit of mm, and E is in a unit of Wh/L.

Optionally, H, h, and E meet a condition 0.004≤(H*h)/E≤0.3.

Specifically, the distance H between the support component 30 and the first plate 40 may be the shortest distance between the support component 30 and the first plate 40, that is, a distance between a surface of the support component 30 close to the first plate 40 and a surface of the first plate 40 close to the support component 30. Alternatively, the distance H between the support component 30 and the first plate 40 may also be an average value of a plurality of sets of distance data measured between the support component 30 and the first plate 40. The present application does not impose any limitation in this respect.

It should be noted that the values of H and h are related to the volumetric energy density of the battery cell. It can be understood that the higher the volumetric energy density E of the battery cell 20 is, the faster the speed of discharging high-temperature gases, particles, and the like in the case of thermal runaway is, requiring a larger space (that is, the value of H) and a protective component 50 with higher strength and thickness (that is, the value of h). The lower the volumetric energy density E of the battery cell 20 is, the smaller the values of H and h are, in order to ensure the grouping efficiency.

The influence of the value of (H*h)/E in the embodiments of the present application on the test results is described in detail below through Comparative Examples 1 to 5 and Embodiments 1 to 18. It should be noted that, except for the different values of H, h, and E, other test conditions of the battery 10 in the comparative examples and the embodiments are the same. For example, test temperatures in the comparative examples and the embodiments are the same. In Table 1, the units of H and h are both mm, and the unit of E is Wh/L.

**Table 1**

| Serial number | H | h | E | (H*h)/E | Is the first plate punctured? | Battery grouping efficiency |
|---|---|---|---|---|---|---|
| Comparative Example 1 | 1 | 0.1 | 100 | 0.001 | Yes | 80% |
| Comparative Example 2 | 20 | 5 | 100 | 1 | no | 62% |
| Comparative Example 3 | 1 | 0.1 | 200 | 0.0005 | Yes | 81% |
| Comparative Example 4 | 30 | 5 | 200 | 0.75 | No | 63% |
| Comparative Example 5 | 1 | 0.1 | 300 | 0.0003 | Yes | 82% |
| Embodiment 1 | 2 | 0.2 | 100 | 0.004 | No | 79% |
| Embodiment 2 | 5 | 0.5 | 100 | 0.025 | No | 77% |
| Embodiment 3 | 10 | 1 | 100 | 0.1 | No | 75% |
| Embodiment 4 | 9 | 2 | 100 | 0.18 | No | 73% |
| Embodiment 5 | 10 | 4 | 100 | 0.4 | No | 68% |
| Embodiment 6 | 12 | 5 | 100 | 0.6 | No | 67% |
| Embodiment 7 | 2 | 0.2 | 200 | 0.002 | No | 79% |
| Embodiment 8 | 5 | 0.5 | 200 | 0.0125 | No | 77% |
| Embodiment 9 | 10 | 1 | 200 | 0.05 | No | 76% |
| Embodiment 10 | 12 | 3 | 200 | 0.18 | No | 75% |
| Embodiment 11 | 15 | 4 | 200 | 0.3 | No | 71% |
| Embodiment 12 | 20 | 5 | 200 | 0.5 | No | 67% |
| Embodiment 13 | 3 | 0.2 | 300 | 0.002 | No | 79% |
| Embodiment 14 | 6 | 0.5 | 300 | 0.01 | No | 77% |
| Embodiment 15 | 9 | 1 | 300 | 0.03 | No | 74% |
| Embodiment 16 | 10 | 3 | 300 | 0.1 | No | 72% |
| Embodiment 17 | 15 | 4 | 300 | 0.2 | No | 71% |
| Embodiment 18 | 20 | 5 | 300 | 0.33 | No | 67% |

As can be seen from the test structure, when H, h, and E meet the above conditions, the probability of the battery being punctured is significantly reduced. When the value range of (H*h)/E is between 0.002 and 0.6, the battery grouping efficiency is higher than 65%, and the first plate 40 of the battery 10 is not punctured. Therefore, by limiting the value range of (H*h)/E to between 0.002 and 0.6, while obtaining a high battery grouping efficiency, the probability of the battery being punctured is capable of being reduced, thereby being capable of reducing the probability of thermal runaway propagation.

When the value range of (H*h)/E is between 0.004 and 0.3, the battery grouping efficiency is higher than 70%, and the first plate 40 of the battery 10 is not punctured. Therefore, by limiting a value range of (H*h)/E to between 0.004 and 0.3, while further obtaining a high battery grouping efficiency, the probability of the battery being punctured is capable of being reduced, thereby being capable of reducing the probability of thermal runaway propagation.

In the embodiments of the present application, a value range of H is: 2 mm≤H≤20 mm, and a value range of h is: 0.2 mm≤h≤5 mm.

By setting the values of H and h within a certain range, while obtaining a high battery grouping efficiency, the probability of the battery being punctured is reduced.

Optionally, H may be 3 mm, 4 mm, 5 mm, 6 mm, 7 mm, 8 mm, 9 mm, 10 mm, 11 mm, 12 mm, 13 mm, 14 mm, 15 mm, 16 mm, 17 mm, 18 mm, 19 mm, or 20 mm, and h may be 0.2 mm, 0.3 mm, 0.4 mm, 0.5 mm, 0.6 mm, 0.7 mm, 0.8 mm, 0.9 mm, 1 mm, 1.1 mm, 1.2 mm, 1.3 mm, 1.4 mm, 1.5 mm, 1.6 mm, 1.7 mm, 1.8 mm, 1.9 mm, 2.0 mm, 2.6 mm, 2.8 mm, 3.0 mm, 3.5 mm, 3.8 mm, 3.9 mm, 4.0 mm, 4.1 mm, 4.2 mm, 4.3 mm, 4.4 mm, 4.5 mm, 4.6 mm, 4.7 mm, 4.8 mm, 4.9 mm, or 5 mm.

In the embodiments of the present application, on a plane perpendicular to a thickness direction of the protective component 50, an overlapping area S1 of a projection of the pressure relief mechanism 213 and a projection of the protective component 50 and a projection area S2 of the pressure relief mechanism 213 meet a condition: 50%≤S1/S2≤100%.

Optionally, S1/S2 may be 50%, 60%, 70%, 80%, 90%, or 100%.

The pressure relief mechanism 213 may have a pressure relief hole, and the projection of the pressure relief mechanism 213 may be a projection of the pressure relief hole, or a cross-sectional area of the pressure relief hole. When the above condition is met, the protective component 50 is capable of at least covering half of the projection area of the pressure relief mechanism 213 to withstand an impact force of the emission ejected from the pressure relief mechanism 213, thereby being capable of reducing the probability of the first plate 40 being punctured, to further reduce the probability of heat propagation in the battery.

It should be noted that the overlapping area between the pressure relief mechanism 213 and the projection of the protective component 50 is S1. The larger the overlapping area S1 is, the better the protective effect achieved by the protective component 50 is. However, due to tolerances in system assembling, the pressure relief mechanism 213 and the protective component 50 may not completely overlap. The above S1/S2=100% means that the value of S1/S2 is approximately 100%, and a certain error may exist.

The influence of the value of S1/S2 on the test results is described in detail below through Comparative Examples 1 to 4 and Embodiments 1 to 6 in Table 2. It should be noted that, except for the different values of S1/S2, other test conditions in the comparative examples and the embodiments in Table 2 are the same. The volumetric energy density E, H, h, and other values of the battery cells in the comparative example and the embodiments are all the same, where the volumetric energy density of the battery cell is E=180 Wh/L, H=3 mm, and h=0.5 mm.

**Table 2**

| Serial number | S1/ S2(%) | Is the first plate punctured? |
|---|---|---|
| Comparative Example 1 | 10% | Yes |
| Comparative Example 2 | 20% | Yes |
| Comparative Example 3 | 30% | Yes |
| Comparative Example 4 | 40% | Yes |
| Embodiment 1 | 50% | No |
| Embodiment 2 | 60% | No |
| Embodiment 3 | 70% | No |
| Embodiment 4 | 80% | No |
| Embodiment 5 | 90% | No |
| Embodiment 6 | 100% | No |

In the embodiments of the present application, a material of the protective component 50 may include at least one of mica, ceramic, carbon fiber, and aerogel.

Specifically, the protective component 50 may include a mica plate, a mica paper, a ceramic plate, a carbon fiber plate, or an aerogel plate.

By setting the material of the protective component 50, the protective component 50 is capable of playing a better protective role, which is capable of reducing the probability of the battery 10 being punctured, and further reducing the probability of thermal runaway propagation.

Referring to FIG. 4 to FIG. 7 again, the embodiments of the present application further provide a battery 10, including a battery cell 20, a support component 30, a first plate 40, and a protective component 50. The battery cell 20 includes a pressure relief mechanism 213, and the pressure relief mechanism 213 is arranged on a first wall 2001 of the battery cell 20. The support component 30 abuts against the first wall 2001 of the battery cell 20 to support the battery cell 20, and is arranged between the battery cell 20 and the first plate 40. The support component 30 is arranged at an interval from the first plate 40 to form an accommodating space 60, and the accommodating space 60 is used to accommodate an emission from the battery cell 20 when the pressure relief mechanism 213 is actuated; and the protective component 50 is arranged on a surface of the first plate 40 close to the support component 30 and is connected to the first plate 40, is arranged opposite to the pressure relief mechanism 213, and is used to withstand an impact force of the emission. The protective component 50 may be a one-piece structure, as shown in FIG. 5; it may also be a long strip-shaped structure, as shown in FIG. 6; it may also be a distributed structure arranged in one-to-one correspondence with the pressure relief mechanism 213, as shown in FIG. 7.

The present application has been described with reference to the above embodiments; however, various modifications may be made and components thereof may be replaced with equivalents without departing from the scope of the present application. In particular, the technical features mentioned in the various examples can be combined in any manner as long as there is no structural conflict. The present application is not limited to the particular embodiments disclosed herein, but rather includes all technical solutions falling within the scope of the claims.

## Claims

1. A battery, wherein the battery (10) comprises a battery cell (20), a support component (30), a first plate (40), and a protective component (50);
the battery cell (20) comprises a pressure relief mechanism (213), and the pressure relief mechanism (213) is arranged on a first wall (2001) of the battery cell (20);
the support component (30) abuts against the first wall (2001) to support the battery cell (20), the support component (30) is arranged between the battery cell (20) and the first plate (40), the support component (30) and the first plate (40) are arranged at an interval to form an accommodating space (60), and the accommodating space (60) is used to accommodate an emission from the battery cell (20) when the pressure relief mechanism (213) is actuated; and
the protective component (50) is arranged between the support component (30) and the first plate (40) and arranged opposite to the pressure relief mechanism (213), and is used to withstand an impact force of the emission.

2. The battery according to claim 1, wherein the protective component (50) is arranged on a surface of the first plate (40) close to the support component (30) and is connected to the first plate (40).

3. The battery according to claim 2, wherein the protective component (50) is adhered to the first plate (40).

4. The battery according to claim 1, wherein the battery (10) comprises a plurality of pressure relief mechanisms (213) and a plurality of protective components (50), and the plurality of pressure relief mechanisms (213) correspond one-to-one with the plurality of protective components (50).

5. The battery according to claim 1, wherein the battery (10) comprises a plurality of pressure relief mechanisms (213) and at least one protective component (50), and at least two of the pressure relief mechanisms (213) correspond to one protective component (50).

6. The battery according to any one of claims 1 to 5, wherein a distance between the support component (30) and the first plate (40) is H, a thickness of the protective component (50) is h, a volumetric energy density of the battery cell (20) is E, and H, h, and E meet a condition: 0.002≤(H*h)/E≤0.6, wherein h<H, both in a unit of mm, and E is in a unit of Wh/L.

7. The battery according to claim 6, wherein H, h, and E meet a condition: 0.004≤(H*h)/E≤0.3.

8. The battery according to claim 6, wherein a value range of H is: 2 mm≤H≤20 mm, and a value range of h is: 0.2 mm≤h≤5 mm.

9. The battery according to any one of claims 1 to 5, wherein on a plane perpendicular to a thickness direction of the protective component (50), an overlapping area S1 of a projection of the pressure relief mechanism (213) and a projection of the protective component (50) and a projection area S2 of the pressure relief mechanism meet a condition: 50%≤S1/S2≤100%.

10. The battery according to any one of claims 1 to 5, wherein a material of the protective component (50) comprises at least one of mica, ceramic, carbon fiber, and aerogel.

11. An electrical apparatus, comprising the battery (10) according to any one of claims 1 to 10, wherein the battery (10) is configured to provide electric energy to the electrical apparatus.
